(19) Europäisches Patentamt
European Patent Office
Office européen des brevets

(11) **EP 4 567 543 B1**

(12) **EUROPEAN PATENT SPECIFICATION**

(45) Date of publication and mention
of the grant of the patent:
**06.05.2026   Bulletin 2026/19**

(21) Application number: **23215014.4**

(22) Date of filing: **07.12.2023**

(51) International Patent Classification (IPC):
**G05D 23/19** *(2006.01)*

(52) Cooperative Patent Classification (CPC):
**G05D 23/1923**

(54) **METHOD FOR CONTROLLING A HYBRID THERMAL SYSTEM**

VERFAHREN ZUR STEUERUNG EINES HYBRIDEN THERMISCHEN SYSTEMS

PROCÉDÉ DE COMMANDE D'UN SYSTÈME THERMIQUE HYBRIDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**11.06.2025   Bulletin 2025/24**

(73) Proprietors:
• **Romande Energie SA**
**1110 Morges (CH)**
• **Realstone Holding SA**
**1006 Lausanne (CH)**

(72) Inventors:
• **LIGEN, Yorick**
**1110 Morges (CH)**
• **BRILLET, Jérémie**
**1134 Vufflens-le-Château (CH)**
• **SIMONATO, Alberto**
**1026 Denges (CH)**

(74) Representative: **Micheli & Cie SA**
**Rue de Genève 122**
**Case Postale 61**
**1226 Genève-Thônex (CH)**

(56) References cited:
**WO-A1-2023/154408**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method for controlling a hybrid thermal system. The invention relates in particular to a method for controlling a hybrid thermal system comprising at least two thermal energy generators and using different types of resources, with a view to optimize the control of the system to meet a chosen objective.

A hybrid thermal system, for example a hybrid central plant for serving thermal energy to one or more buildings and/or to industrial processes, typically includes various types of equipment, or thermal energy generators, configured to serve the required thermal energy loads. For example, a hybrid thermal system may include heat pumps, combustion boilers, air conditioners, cooling towers, electric heaters, gas burners or any other types of thermal energy generators configured to provide heating or cooling. A hybrid thermal system typically consumes different resources from a local storage, such as for example, but not exclusively, oil, coal, wood pellets, natural gas and/or hydrogen, and/or from a distribution network, or grid, such as for example electricity, water and/or gas. The hybrid thermal system consumes these resources to provide thermal energy to one or more buildings and/or to industrial plants, for example by heating or cooling a working fluid such as for example water or glycol that is circulated to the buildings and/or plants, and/or by direct heating and/or cooling of the buildings and/or plants.

High efficiency equipment can help reduce the amount of energy consumed by a hybrid thermal system and/or reduce the amount of carbon emissions or other pollution associated with operation of the hybrid thermal system. However, the effectiveness of such equipment is highly dependent on the control method that is used to distribute the load across the multiple thermal energy generators. It is difficult and challenging to determine when and to what extent each of the multiple thermal generators should be used in order for example to reduce or minimize costs and/or carbon emissions, which is not necessarily linked to reducing or minimizing energy consumption. If various utility costs, carbon emissions, and other penalties or incentives are all of interest, controlling the hybrid thermal system with a view to meet a certain objective, for example in terms of costs and/or carbon emissions, can be very complicated.

WO 2023/154408 A1 (JOHNSON CONTROLS TYCO IP HOLDINGS LLP [US]) 17 August 2023 (2023-08-17) shows a central plant system including a plurality of generator subplants. A heater subplant may be configured to generate hot thermal energy (e.g., hot water) by heating water using electricity or natural gas. A first subsystem and the second subsystem are configured to produce the same resource, shown as the generated resource. Production of the generated resource by the combination of the first subsystem and the second subsystem serves a demand for the generated resource, for example a demand from a building for the generated resource. A controller is configured to allocate predicted demand for the generated resource between the first subsystem and the second subsystem, for example by determining, for each time step over an optimization period, a first amount of the generated resource to be produced by the first subsystem and a second amount of the generated resource to be produced by the second subsystem. The controller can execute an optimization process subject to a constraint that requires a predicted demand for the generated resource to be equal to a portion of the predicted demand allocated to the first subsystem plus a portion of the predicted demand allocated to the second subsystem. The portion of the simulation period over which the resource allocation is optimised may be defined by a prediction window ending at a time horizon. With each iteration of the optimization, the prediction window is shifted forward. This process may be repeated for each subsequent optimization period to generate updated resource allocations.

An aim of the present invention is to provide a method for controlling a hybrid thermal system in order to meet a chosen objective under dynamic conditions and/or constraints.

Another aim of the present invention is to provide a method for controlling a hybrid thermal system in order for example to minimize carbon emissions associated with operation of the system over a set period of time.

Yet another aim of the present invention is to provide a method for controlling a hybrid thermal system allowing for an optimal resource management over a set period of time.

These aims and other advantages are achieved with a method for controlling a hybrid thermal system, the hybrid thermal system having a plurality of thermal energy generators and using various resources for producing thermal energy and having a controller for individually controlling operation of each thermal energy generator of said plurality of thermal energy generators, the plurality of thermal energy generators comprising a first thermal energy generator using a first resource and a second thermal energy generator using a second resource different from the first resource, the method comprising the steps of:

- obtaining a predicted thermal energy demand to be satisfied by the hybrid thermal system over a future time period;
- determining an allocation of said predicted thermal energy demand between the plurality of thermal energy generators of said thermal energy system over said future time period in order to optimize a parameter associated with operation of the hybrid thermal system;
- operating said hybrid thermal system during said time period, by:

    1) individually controlling each thermal energy generator of said plurality of thermal energy generators according to the determined allocation in order to satisfy an instant thermal energy demand;

2) estimating a remaining thermal energy demand of said predicted thermal energy demand to be satisfied by the hybrid thermal system over the remainder of said time period and verifying the feasibility of the previously determined allocation for satisfying said remaining thermal energy demand;

3) if said verifying is negative, correcting the previously determined allocation for said remainder of said time period in order to satisfy said remaining thermal energy demand while optimizing said parameter associated with operation of the hybrid thermal system over said remainder of said time period;

4) periodically repeating steps 1) to 3) above until the end of said time period.

Continuously correcting the previously determined allocation of the thermal energy demand between the thermal energy generators according to the invention allows adapting the initial allocation plan to the actual operating conditions and to the possibly changing input parameters such as for example constraints and demand predictions, while still optimizing the parameter associated with operation of the hybrid thermal system to be optimized. It further allows avoiding predictable critical situations in an optimal manner, for example by minimizing the carbon emission associated with the necessary corrections. The correction may for example imply that in order to favor long term performance, short term performance for a specific objective could be temporarily downgraded, for example by increasing carbon emission during a timestep to ensure lowest emissions on average with a limited stock.

In embodiments, the time period is one calendar year.

The step of estimating and verifying is for example repeated every fifteen minutes, or at a timestep long enough to allow the determining of the allocation over the entire time period.

Preferably, the steps of determining and of correcting the allocation of the thermal energy demand between the plurality of thermal energy generators of said thermal energy system comprises taking into account one or more input parameters selected amongst parameters related to the production and/or consumption of the various resources, parameters related to technical characteristics of the thermal energy generators of said plurality of thermal energy generators and/or parameters related to meteorological data.

The parameters related to the production and/or consumption of the various resources for example comprise an emission factor for each resource of said various resources and the parameters related to technical characteristics of the thermal energy generators of said plurality of thermal energy generators comprise an efficiency rate for each thermal energy generator.

Preferably, the steps of determining and of correcting the allocation of the thermal energy demand between the plurality of thermal energy generators of said thermal energy system comprises taking into account one or more constraints selected amongst constraints related to the supply of the various resources and/or constraints related to technical characteristics of the thermal energy generators of said plurality of thermal energy generators.

The first resource is sourced by said hybrid thermal system for example from a grid and said constraints related to the supply of the various resources comprise a grid connection limit.

The second resource is sourced by said hybrid thermal system for example from a local storage and said constraints related to the supply of the various resources comprise a storage capacity and/or a refill interval of said local storage.

In preferred embodiments, the step of correcting the previously determined allocation for said remainder of said time period comprises: determining time moments at which the previously determined share of the remaining thermal energy demand to be satisfied by one or more thermal energy generators of the plurality of thermal energy generators can be increased by a predetermined correction factor in order to satisfy the remaining thermal energy demand; selecting a time moment from the previously determined time moments at which the increase by the correction factor least impacts the parameter to be optimized associated with operation of the hybrid thermal system; correcting by the correction factor the previously determined allocation at the selected time moment for the one or more thermal energy generators of the plurality of thermal energy generators.

The aims mentioned above and other advantages are also achieved with a controller for a hybrid thermal system having a plurality of thermal energy generators and using various resources for producing thermal energy, the plurality of thermal energy generators comprising a first thermal energy generator using a first resource and a second thermal energy generator using a second resource different from the first resource, the controller being configured for individually controlling operation of each thermal energy generator of said plurality of thermal energy generators according to the above method.

The aims mentioned above and other advantages are also achieved with a hybrid thermal system having a plurality of thermal energy generators and using various resources for producing thermal energy and having such a controller for individually controlling operation of each thermal energy generator of said plurality of thermal energy generators, the plurality of thermal energy generators comprising a first thermal energy generator using a first resource and a second thermal energy generator using a second resource different from the first resource.

The present invention will be better understood by reading the following description illustrated by the figures, where:

Figure 1 is a schematic illustration of a hybrid thermal system comprising two thermal energy generators and a controller according to the invention;

Figure 2 is a flowchart partly illustrating a method according to the invention for controlling the hybrid thermal system of figure 1.

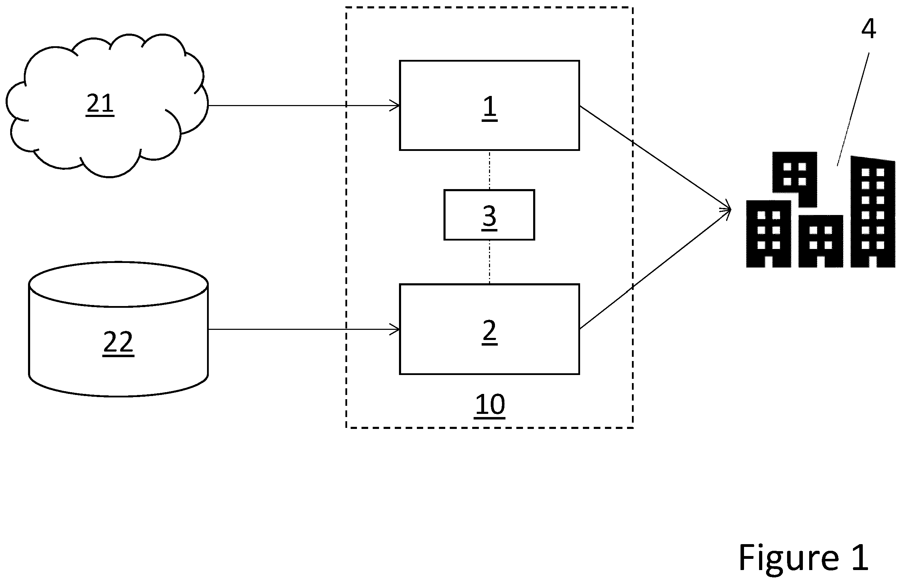

The method of the invention will be described in more details in relation with a hybrid thermal system 10 schematically illustrated in figure 1. In the illustrated example, the hybrid thermal system 10 is a hybrid heating system 10 comprising a first heating device 1 and a second heating device 2, the first heating device 1 using for example a resource from a grid 21 and the second heating device 2 using for example a resource from a local storage 22. The hybrid heating system 10 is for example configured to deliver heat loads to one or more buildings 4 in any appropriate manner, for example by direct heating and/or by circulating a heated working fluid, in order to satisfy the heat demand of the buildings 4.

The method of the invention can however be applied for controlling any type of hybrid thermal system, i.e. for controlling any hybrid heating and/or cooling system comprising two or more heating and/or cooling devices. The use of the hybrid thermal system may also vary without departing from the scope of the invention. The hybrid thermal system may for example be intended for heating and/or cooling apartment houses, office buildings, shopping malls, sport centers, industrial plants and/or any other facility requiring thermal energy loads for its heating and/or cooling and/or for its functioning.

In the illustrated hybrid heating system 10, the first heating device 1 is for example a heat pump using electricity from a grid 21, i.e. a public distribution network, while the second heating device 2 is for example a burner using hydrogen ($H_2$) or natural gas from a local storage 22.

According to the invention, the hybrid heating system 10 comprises a controller 3 for controlling the first and second heating devices 1, 2, in particular for selectively activating the first heating device 1 and/or the second heating device 2, in accordance with the method of the invention.

As will be explained in more details below, the method of the invention comprises allocating a predicted thermal energy demand to be satisfied by the hybrid thermal system over a future time period, for example over a next calendar year, between the plurality of thermal energy generators in an attempt to optimize a parameter associated with operation of the hybrid thermal system, such as for example costs, carbon emissions and/or a combination thereof, over the future time period. According to the invention, the method further comprises, during the time period, operating the hybrid thermal system according to the determined allocation and periodically checking the feasibility of the previously determined allocation for the remainder of the set time period. If an error occurs, i.e. if the previously determined allocation is not feasible, for example because one or more resources are scarce, the predicted demand, the weather forecasts and/or the production conditions of one or more resources have changed, the determined allocation for the remainder time period is corrected in order to satisfy the remaining heat demand while still optimizing the parameter associated with operation of the hybrid thermal system over the remainder time period.

The predicted thermal energy demand for the set time period, which can be estimated for example on the basis of past data and/or on weather forecasts, is typically directly or indirectly time dependent, i.e. it isn't constant over the entire set time period. The input parameters taken into account by the controller 3 for determining and correcting the allocation of the thermal energy demand typically include parameters related to the production and/or consumption of the individual resources such as for example cost per kWh and/or carbon footprint, minimal time interval between local storage refills, and parameters related to external factors such as weather forecast and historical meteorological data, historical use, predicted use, predicted production costs and/or emission factor of the resources, etc.

The controller 3 is configured to perform the method of the invention for allocating the thermal energy demand, for example the heat demand, to either the first heating device 1 or the second heating device 2 or both with a view to optimize the parameter associated with operation of the hybrid thermal system, for example to minimize the carbon footprint or the costs, or a combination thereof. The method of the invention preferably takes into account the impact that refueling the local storage 22 with the corresponding resource has on the parameter to optimize.

The method of the invention may also be used to size the maximum power and storage capacity of a given system. For example to minimize investment costs, footprint or lifecycle emissions. For sizing purposes, the method of the invention is applied with historical input parameter from a representative year including extreme events for sizing purposes, and iterate with various size of heating devices and local storage.

The total thermal energy demand, for example the total heat demand, can be expressed by the following equation:

$$W(t) = \sum_i W_i(t) \qquad (1)$$

where W [kW] is the heat demand, which is typically a variable input as a function of time t, and $W_i$ [kW] is the heat demand satisfied by heating device i. In relation with the illustrated hybrid heating system 10, for example, $W_1$ is the heat demand satisfied by the first heating device 1 and $W_2$ is the heat demand satisfied by the second heating device 2. The heat demand typically varies over time due for example to the season, the time of the day, the external temperature, the occupation rate of the one or more buildings 4, etc.

According to the method of the invention, the heat demand is satisfied by one or by several heating devices 1, 2 of the hybrid heating system 10. The respective share of each heating device 1 or 2, i.e. the allocation of the heat demand between the first and second heating devices 1, 2, is a function of time. For two heating devices, this can be expressed with equation (2) below:

$$W_1(t) = \alpha(t)W(t) \; and \; W_2(t) = (1 - \alpha(t))W(t)$$

$$W(t) = \alpha(t)W(t) + \big(1 - \alpha(t)\big)W(t) \qquad (2)$$

where $\alpha$ is the share of the heat demand W supplied by the first heating device 1, expressed as a value from 0 to 1.

In embodiments where the hybrid thermal system comprises more than two thermal energy generators, a sequence of factors $\alpha_i$ may be defined, with the following condition

$$\sum_i \alpha_i = 1$$

where $\alpha_i$ is the share of the thermal energy demand W supplied by thermal energy generator i, expressed as a value from 0 to 1:

$$W_i(t) = \alpha_i(t) \times W(t)$$

A step of the method of the invention is to define the function $\alpha(t)$ for a given time period, with the constraints below.

Each thermal energy generator of the hybrid thermal system has a specific efficiency, which can vary over time.

$$W_i(t) = \eta_i(t) \times E_i(t) \qquad (3)$$

where $n_i$ is the efficiency of thermal energy generator i, which can be a function of time for a heat pump for example, and $E_i$ [kWh/dt] is the energy consumption rate of the energy resource for thermal energy generator i. The energy resources can be sourced from a grid, a local storage or a combination of the two.

The first constraint of the hybrid thermal system is that the thermal energy demand that can be satisfied by each thermal energy generator i at time t is limited to a maximum, which generally depends on the technical characteristics of the generator. This can be expressed as:

$$W_i(t) < W_{i,max} \quad \text{(constraint 1)}$$

The second constraint of the hybrid thermal system is that the maximum thermal energy demand that can be satisfied by the hybrid thermal system at time t is limited to the addition of the maximum thermal energy demand $W_{i,max}$ that can be satisfied by each heating thermal energy generator i.

$$\max W(t) \leq \sum_i W_{i,max} \quad \text{(constraint 2)}$$

The energy consumption rate $E_i$ [kWh/dt] of each thermal energy generator i can be expressed as

$$E_i(t) = G_i(t) + S_i(t) \qquad (4)$$

where Gi [kWh/dt] is the energy consumption rate of thermal energy generator i from the grid, for example a gas grid or an electrical grid, and Si [kWh/dt] is the energy consumption rate of thermal energy generator i from a local storage, for example a gas tank or a battery.

In the configuration of the illustrated hybrid heating system 10, $E_1=G_1$ because the first heating device 1 only sources its resource from the grid 21 and $E_2=S_2$ because the second heating device 2 only sources its resource from the local storage 22. Other configurations of thermal energy systems are however possible within the scope of the invention, in particular configurations where one or more thermal energy generators of the hybrid thermal system may source a resource from a grid and a different or the same resource from a local storage.

For resources from a grid, the energy consumption rate can not be higher than the grid connection limit, i.e.

$$G_i(t) < G_{i,max} \quad \text{(constraint 3)}$$

where $G_{i,max}$ is the grid connection limit, which may be time dependent in order to take into account grid congestion constraints.

For each resource, the emission factor can be a function of time, depending for example on time varying production conditions of the resource, for example on the instant electricity mix. For simplification it is assumed in the following equations that the grid and the local storage have the same emission factor for a particular resource, but the method can be adapted within the scope of the invention to account for example that a battery can store low carbon energy, electricity from the battery, i.e. from a local storage, possibly having a lower emission factor than electricity from the grid. Furthermore, in the following embodiments, it is only accounted for emissions during the operating phase of the system.

The emission factor of a thermal energy generator i using a particular resource is thus calculated as

$$Em_i(t) = EF_i(t) \times E_i(t) \qquad (5)$$

where EF [$gCO_{2e}$/kWh] is the carbon dioxide emission factor and Em [$gCO_{2e}$/dt] is the carbon dioxide emission rate. EF(t) is preferably known or at least accessible information. For electricity, it may for example be provided by the suppliers or grid operators, or by third parties. For hydrogen, gas or other resources it may for example be provided by the supplier depending on the source used for production, which can also vary over time.

An aim of the method of the invention is for example to minimize the carbon footprint FP [$gCO_{2e}$] associated with operation of the hybrid thermal system for a set time period starting at $t_1$ and ending at $t_2$. The time period is for example a calendar year where $t_1$ is 00:00 on 1st January and $t_2$ is 23:59 on 31st December of the same year. Other time periods are however possible within the frame of the invention. The carbon footprint of the hybrid thermal system over this time period can be expressed as:

$$FP = \int_{t_1}^{t_2} \sum_i Em_i(t) \cdot dt \qquad (6)$$

Combining equation 5 and equation 6:

$$FP = \int_{t_1}^{t_2} \sum_i EF_i(t) \times E_i(t) \cdot dt$$

$$FP = \int_{t_1}^{t_2} \sum_i EF_i(t) \times \frac{1}{\eta_i(t)} \times W_i(t) \cdot dt$$

In embodiments, at least one of the thermal energy generators of the hybrid thermal system uses a resource from a local storage that needs to be refilled periodically. In the following equations, D is the refilling interval of the local storage, i.e. the minimum time between two batch deliveries of the corresponding resource, to be defined based for example, but not exclusively, on physical, logistic and/or economic constraints. The consumption of this particular resource during this period D cannot exceed the stock, i.e. the storage capacity, expressed in [kWh].

$$\int_t^{t+D} S_i(t) \cdot dt < \max(stock_i(t)) \quad \text{(constraint 4)}$$

According to the illustrated example, the hybrid heating system 10 comprises the first heating device 1 as a heat pump supplied in electricity by the grid 21 only and the second heating device 2 as a hydrogen boiler supplied in hydrogen by the local storage 22 only.

According to the invention, it is assumed that the predicted heat energy demand W(t) to be supplied by the hybrid heating system 10 over the set time period is known. The predicted heat demand was for example estimated on the basis of historical data of one or more similar past time periods and/or on the basis of short to possibly long term weather forecasts, predicted use of the buildings 4, etc.

The emission factor $EF_2$ and the efficiency $\eta_2$ of the second heating device 2 are known from its technical characteristics and fixed.

The efficiency $\eta_1$ of the first heating device 1 can be for example calculated with existing data and is tabulated by heat pump suppliers based for example on the time-dependent external temperature T°(t).

According to the invention, the method for controlling the hybrid heating system 10 comprises determining by the controller 3 the allocation of the heat demand W(t) between the first and second heating devices 1, 2, i.e. determining the preferably time dependent share of the heat demand W(t) supplied by each heating device 1, 2 for the set time period to come, for example one calendar year, with a view to optimize a parameter associated with operation of the hybrid heating system 10, for example the carbon footprint FP of the operation of the system 10 during this time period.

Out of simplification, it is assumed that for $t < t_1$ everything is known, i.e. that costs, emissions, carbon footprint, etc. associated with operation of the hybrid heating system 10 at any time before the time period starting a $t_1$ are known.

For calculation purposes, the timestep interval dt is for example set to 15 min, such that the integral over a time period of a calendar year can be converted into a sum of 8760 x 4 = 35 040 data points. According to this example, determining the initial allocation of the heat demand between the first heating device 1 and the second heating device 2 over the set time period thus implies determining 35 040 values of $\alpha$. Other time intervals are however possible within the frame of the invention. The timestep is preferably short enough to achieve an efficient optimization of the parameter to be optimized, and long enough to allow controller 3 to compute the allocation for the entire time period.

As explained above, the carbon footprint associated with the operation of the heating system 10 for the set time period can be calculated as:

$$ FP = \int_{t_1}^{t_2} \left[ EF_1(t) \times \frac{1}{\eta_1(t)} \times W_1(t) + EF_2(t) \times \frac{1}{\eta_2(t)} \times W_2(t) \right] \cdot dt $$

$$ FP = \int_{t_1}^{t_2} \left[ EF_1(t) \times \frac{1}{\eta_1(t)} \times \alpha(t) + EF_2 \times \frac{1}{\eta_2} \times (1 - \alpha(t)) \right] \times W(t) \cdot dt $$

An aim of the method of the invention is thus to determine $\alpha(t)$ that results for example in a minimal value for the integral above, taking into account constraints 1 to 4 above.

In embodiments where the hybrid thermal system comprises more than two devices, the equation is:

$$ FP = \int_{t_1}^{t_2} \sum_i [EF_i(t) \times \frac{1}{\eta_i(t)} \times \alpha_i(t)] \times W(t) \cdot dt $$

and the shares $\alpha_i$ of the heat demand W supplied by each thermal energy generator i has to be determined for each timestep of the set time period.

The initial allocation of the predicted heat energy demand between the first heating device 1 and the second heating device 2 for the future time period, which will be used at least initially for controlling the hybrid heating system 1 during the set time period and possibly for sizing the hybrid heating system 1, are preferably determined using historical data as input parameters.

$G_{1,max}$ is for example set as a default value, without any grid upgrade from the current or past situation; $W_{1,max}$ is for example set to be equal to $G_{1,max}$; $W_{2,max}$ may be initially set to max(W(t)), which is valid with constraint 2; the stock of hydrogen in the local storage 22 may for example be set to 100 kg; the refill interval D is for example two weeks; and it is assumed that the local storage 22 was refilled at $t=t_1$, i.e. at the beginning of the set time period.

The initial allocation is also determined using forecast energy costs and/or emission factors for the set time period, that are for example based on historical data.

During the set time period, the controller 3 controls the operation of the hybrid heating system 10 during the set time period by selectively activating and/or deactivating each heating device 1, 2 according to the determined allocation. Preferably at each time interval dt during the set time period, the controller 3 performs again the step of determining the allocation while optimizing the parameter to be optimized for the remainder of the time period, on the basis of historical data from $t_1$ to t and using possibly updated predicted data from t to $t_2$, as is summarized in the chart below.

| $t_1$ | t | t+dt | $t_\varepsilon$ | $t_2$ |
|---|---|---|---|---|
| Historical data known and logged | Current time | Next time interval for which the value of $\alpha$ must be determined | Time when an error occurs in the allocation | End of set time period |
| Historical data | | Predicted data (based for example on meteorological, market, industrial predictions), which is accurate close to t but more uncertain for longer term. | | |

According to the invention, periodically repeating the step of determining the allocation of the remaining thermal energy demand while operating the hybrid thermal system allows regularly adapting the previously determined allocation with updated short term predictions that are usually more accurate than the long term predictions used for the initial allocation, with a view of optimizing the parameter to be optimized. It also allows checking the feasibility of the previously determined allocation for the remainder of the time period and, in case the previously determined allocation doesn't allow responding to the remaining heat demand, determining an error time $t_\varepsilon$ at which an error would occur.

If the step of checking the feasibility of the previously determined allocation shows that an error will occur at an error time $t_\varepsilon$ during the remainder of the time period, the allocation for the remainder of the time period will be corrected in order to still optimize the parameter associated with an operation of the hybrid thermal system as explained in more details below. This step of correcting the previously determined allocation may imply that, in order to optimize the parameter associated with operation of the hybrid thermal system over the remaining time period, short term performance of the parameter is temporarily downgraded. For example, the carbon footprint could be temporarily raised above the short-term feasible minimum, for example during one or more timesteps, to ensure lowest carbon footprint on average over the remaining time period or part of the remaining time period, for example until the next storage refill.

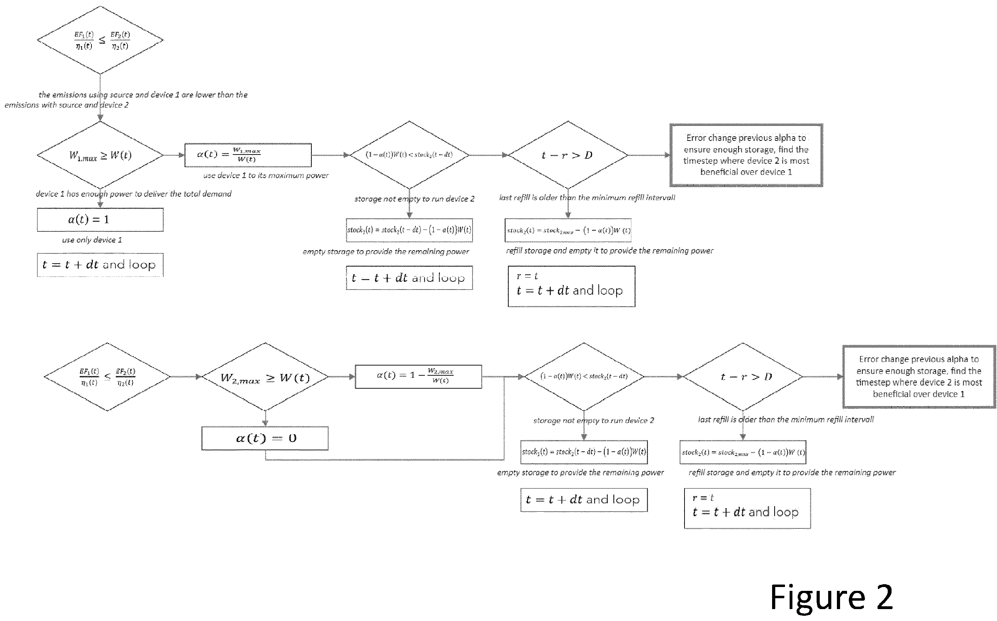

Figure 2 is a flow diagram illustrating the determination by the controller 3, according to a preferred embodiment of the invention, of the allocation of the heat demand between the first heating device 1 and the second heating device 2 of the illustrated hybrid heating system 10, i.e. the determination of the values of $\alpha(t)$ for t comprised between $t_1$ and $t_2$, wherein the parameter associated with operation of the hybrid heating system 10 to be optimized is the carbon emissions, or the carbon footprint, of the hybrid heating system 1.

For the initial determination of the allocation over the future time period, i.e. for the determination of the values of $\alpha(t)$ for the entire time period before the time period has begun, the determination step starts with $t=t_1$.

In a first check, the controller 3 first determines, based on predicted data, whether at time t the carbon emissions resulting from using the first heating device 1 and electricity from the grid 21 will be lower than the carbon emissions resulting from using the second heating device 2 and for example hydrogen from the local storage 22.

If the answer to the first check is yes, i.e. if the carbon emissions resulting from using the first heating device 1 and electricity from the grid 21 are lower at time t than the carbon emissions resulting from using the second heating device 2 and the resource from the local storage 22, then the controller 3 further checks whether the first heating device 1 has the capacity to satisfy the total heat demand at time t, i.e. whether $W_{1,max} \geq W(t)$.

If the answer is yes, then the controller 3 allocates the heat demand at time t to the first heating device 1 only, i.e. the controller sets $\alpha(t)$ to 1, increments the time by the timestep dt and goes back to the first check for this incremented time until $t=t_2$.

If the answer is no, then the controller 3 determines that at time t the heating device 1 is to be used to its maximum capacity and the remaining heat demand is to be allocated to the second heating device 2. In a next check, however, the controller 3 checks whether the stock of the resource for the second heating device 2 in the local storage 22 is sufficient for this activation of the second heating device 2.

If the answer to this check is yes, then the controller 3 increments the time by the timestep dt and goes back to the first check for this incremented time until $t=t_2$.

If the answer is no, i.e. if the stock in the local storage 22 is too low for this activation of the second heating device 2, The controller 3 checks whether the last refill was older than the minimal refill interval D.

If the answer is yes, i.e. if the local storage 22 may be refilled for time t, then the controller sends an alarm or any appropriate signal or command for a refill of the local storage 22 for time t at the latest, increments the time by the timestep dt and goes back to the first check for this incremented time until $t=t_2$.

If the answer is no, i.e. if the local storage 22 may not be refilled for time t, then the controller 3 detects an error and initiates a step of correcting the previously determined allocation that will be explained in more details below.

If the answer to the first check is no, i.e. if the carbon emissions resulting from using the first heating device 1 and electricity from the grid 21 are higher at time t than the carbon emissions resulting from using the second heating device 2 and the resource from the local storage 22, then the controller 3 further checks whether the second heating device 2 has the capacity to satisfy the total heat demand at time t, i.e. whether $W_{2,max} \geq W(t)$.

If the answer is yes, then the controller 3 allocates the heat demand at time t to the second heating device 2 only, i.e. the controller sets $\alpha(t)$ to 0, increments the time by the timestep dt and goes back to the first check.

**If** the answer is no, then the controller 3 determines that at time t the second heating device 2 is to be used to its maximum capacity and allocates the remaining heat demand to the first heating device 1.

**In** both cases, however, the controller 3 checks whether the stock of the resource for the second heating device 2 in the local storage 22 is sufficient for this planned activation of the second heating device 2.

**If** the answer to this check is yes, then the controller 3 increments the time by the timestep dt and goes back to the first check for this incremented time until $t=t_2$.

**If** the answer is no, i.e. if the stock in the local storage 22 is too low for this activation of the second heating device 2, the controller 3 checks whether the last refill was older than the minimal refill interval D.

**If** the answer is yes, i.e. if the local storage 22 may be refilled for time t, then the controller sends an alarm or any appropriate signal or command for a refill of the local storage 22 for time t at the latest, increments the time by the timestep dt and goes back to the first check for this incremented time until $t=t_2$.

**If** the answer is no, i.e. if the local storage 22 may not be refilled for time t, then the controller 3 detects an error and initiates a step of correcting the previously determined allocation.

When the controller 3 detects an error, it initiates a step of correcting the previously determined values of $\alpha(t)$, i.e. the previously determined allocation of the heat demand, for the remaining time interval up to the time of the error $t_e$ in order to avoid this predicted critical situation from happening while still aiming at minimizing the parameter to be optimized associated with operation of the hybrid heating system 10, for example the carbon emission.

In a first operation, the controller 3 determines time moments during the remaining time interval up to the time of the error $t_e$ at which it is possible to reduce the consumption of the stock in the local storage 22, i.e. time moments when the second heating device 2 can be used at a lower power than initially determined, in order to save resource from the local storage 22. This first operation is performed by finding time moments in the remaining time interval up to the time of the error $t_e$ where the previously determined value of $\alpha(t)$ is lower than a threshold $1-\varepsilon$, i.e. time moments where the second heating device 2 is used for satisfying more than a minimal share $\varepsilon$ of the heat demand, and where the first heating device 1 can be operated to satisfy a higher share than the predetermined share, i.e. where $(\alpha(t) + \varepsilon) \times W(t) < W_{1,max}$.

These determined time moments are then stored in a list of k numbers $t_{\varepsilon,k}$.

In a next operation, the controller 3 determines at which time moment $t_{\varepsilon,m}$ within the options identified in the first operation, i.e. within the k time moments $t_{\varepsilon,k}$ of the list, the carbon emissions resulting from using the first heating device 1 and electricity from the grid 21 are the lowest, i.e. the m that satisfies the following condition:

$$\forall k, \left.EF_1\left(t_{\varepsilon,k}\right)\middle/\eta_1\left(t_{\varepsilon,k}\right)\right. \geq \left.EF_1\left(t_{\varepsilon,m}\right)\middle/\eta_1\left(t_{\varepsilon,m}\right)\right.$$

In a last operation, the controller 3 corrects the previously determined allocation by replacing previously determined $\alpha(t_{\varepsilon,m})$ with $\alpha(t_{\varepsilon,m})+\varepsilon$, thus resulting in the share of the heat demand at time $t_{\varepsilon,m}$ satisfied by the first heating device 1 being slightly increased from the previously determined optimal share such that the stock in the local storage 22 will be sufficient to avoid the predicted error.

If the hybrid heating system 10 was not properly sized and the increase in the share of heating device 1, for example, required for satisfying the total heat demand is not possible, the method of the invention preferably allows violating one of the constraints, for example by upgrading the grid connection limit and/or refilling the local storage 22 before the refill interval D.

The correction factor $\varepsilon$ is preferably set large enough to allow for an efficient avoidance of predictable critical situations while small enough to take into account more correction opportunities, i.e. more time moments $t_{\varepsilon,k}$ where a correction of the allocation is possible, in order to increase the chances to find the right time moment for correcting the allocation while minimizing for example the additional carbon emission associated with this correction.

The method of the invention was described above in relation with a hybrid heating system 10 comprising two heating devices 1,2. The one skilled in the art will however understand that the method of the invention may be used to control any hybrid thermal system delivering heating and/or colling thermal energy using two or more thermal energy generators.

The method of the invention for controlling a hybrid thermal system thus allows a controller of the hybrid thermal system to:

- determine a time-dependent initial allocation of the total thermal energy demand over a future time period between the plurality of thermal energy generators of the hybrid thermal system while optimizing a parameter associated with operation of the hybrid thermal system over said time period,
- operating the hybrid thermal system according to the determined allocation during the time period,
- during the time period, periodically repeat the step of determining the allocation for the estimated remaining thermal energy demand and possibly adapting the allocation for the remaining time period on the basis of adapted input data, for example updated predicted data, while still optimizing the parameter to be optimized over the remaining time period, and detecting an error condition if the remaining thermal energy demand can not be satisfied under the current constraints and/or input parameters,

- correcting the previously determined allocation in order to avoid the detected error by determining the most appropriate time moment for correcting the previously determined allocation in order to satisfy the remaining thermal energy demand while minimizing the increase in the parameter to optimize.

According to the invention, the correction of the allocation in order to avoid an error condition is performed at the most appropriate time moment in the remaining time period in order to minimize the impact of the correction on the parameter to be optimized. Instant performance may thus be temporarily suboptimal in order to still optimize the parameter to be optimized over the entire remaining time period.

## Claims

1. Method for controlling a hybrid thermal system (10), said hybrid thermal system (10) having a plurality of thermal energy generators and using various resources for producing thermal energy and having a controller (3) for individually controlling operation of each thermal energy generator of said plurality of thermal energy generators, the plurality of thermal energy generators comprising a first thermal energy generator (1) using a first resource and a second thermal energy generator (2) using a second resource different from the first resource, the method comprising the steps of:

   - obtaining a predicted thermal energy demand to be satisfied by the hybrid thermal system (10) over a future time period;
   - determining an allocation of said predicted thermal energy demand between the plurality of thermal energy generators of said thermal energy system (10) over said future time period in order to optimize a parameter (FP) associated with operation of the hybrid thermal system (10);
   - operating said hybrid thermal system (10) during said time period, by:

      1) individually controlling each thermal energy generator of said plurality of thermal energy generators according to the determined allocation in order to satisfy an instant thermal energy demand;

      **characterised in that** said operating said hybrid thermal system (10) during said time period further comprises:

      2) estimating a remaining thermal energy demand of said predicted thermal energy demand to be satisfied by the hybrid thermal system (10) over the remainder of said time period and verifying the feasibility of the previously determined allocation for satisfying said remaining thermal energy demand;
      3) if said verifying is negative, correcting the previously determined allocation for said remainder of said time period in order satisfy said remaining thermal energy demand while optimizing said parameter (FP) associated with operation of the hybrid thermal system (10) over said remainder of said time period;
      4) periodically repeating steps 1) to 3) above until the end of said time period.

2. Method according to the previous claims, wherein said time period is one calendar year.

3. Method according one of the previous claims, wherein said step of estimating and verifying is repeated every fifteen minutes.

4. Method according one of the previous claims, wherein said steps of determining and of correcting the allocation of the thermal energy demand between the plurality of thermal energy generators of said thermal energy system (10) comprises taking into account one or more parameters selected amongst parameters related to the production and/or consumption of the various resources, parameters related to technical characteristics of the thermal energy generators of said plurality of thermal energy generators and/or parameters related to meteorological forecasts.

5. Method according to the previous claim, wherein the parameters related to the production and/or consumption of the various resources comprise an emission factor (EF) for each resource of said various resources and the parameters related to technical characteristics of the thermal energy generators of said plurality of thermal energy generators comprise an efficiency rate for each thermal energy generator.

6. Method according to one of the previous claims, wherein said steps of determining and of correcting the allocation of the thermal energy demand between the plurality of thermal energy generators of said thermal energy system (10) comprises taking into account one or more constraints selected amongst constraints related to the supply of the various resources and/or constraints related to technical characteristics of the thermal energy generators of said plurality of thermal energy generators.

7. Method according to the previous claim, wherein said first resource is sourced by said hybrid thermal system (10) from a grid (21) and said constraints related to the supply of the various resources comprise a grid connection limit.

8. Method according to one of claims 6 and 7, wherein said second resource is sourced by said hybrid thermal system (10) from a local storage (22) and said constraints related to the supply of the various resources comprise a storage capacity and/or a refill interval (D) of said local storage (22).

9. Method according to one of the previous claims, wherein the step of correcting the previously determined allocation for said remainder of said time period comprises:

- determining time moments at which the previously determined share of the remaining thermal energy demand to be satisfied by one or more thermal energy generators (1) of said plurality of thermal energy generators (1, 2) can be increased by a predetermined correction factor in order to satisfy the remaining thermal energy demand;
- selecting a time moment from the previously determined time moments at which said increase by said correction factor least impacts said parameter (FP) to be optimized associated with operation of the hybrid thermal system (10);
- correcting by said correction factor the previously determined allocation at said selected time moment for said one or more thermal energy generators (1) of said plurality of thermal energy generators (1, 2).

10. Controller (3) for a hybrid thermal system (10) having a plurality of thermal energy generators and using various resources for producing thermal energy, the plurality of thermal energy generators comprising a first thermal energy generator (1) using a first resource and a second thermal energy generator (2) using a second resource different from the first resource, the controller (3) being configured for individually controlling operation of each thermal energy generator of said plurality of thermal energy generators according to the method of one of the preceding claims.

11. Hybrid thermal system (10) having a plurality of thermal energy generators and using various resources for producing thermal energy and a controller (3) according to the preceding claim for individually controlling operation of each thermal energy generator of said plurality of thermal energy generators, the plurality of thermal energy generators comprising a first thermal energy generator (1) using a first resource and a second thermal energy generator (2) using a second resource different from the first resource.

**Patentansprüche**

1. Verfahren zur Steuerung eines hybriden thermischen Systems (10), wobei das hybride thermische System (10) mehrere thermische Energie erzeugende Generatoren aufweist und verschiedene Ressourcen zum Erzeugen thermischer Energie nutzt und eine Steuerung (3) zum individuellen Steuern des Betriebs jedes thermische Energie erzeugenden Generators der mehreren thermische Energie erzeugenden Generatoren aufweist, wobei die mehreren thermische Energie erzeugenden Generatoren einen ersten thermische Energie erzeugenden Generator (1), der eine erste Ressource nutzt, und einen zweiten thermische Energie erzeugenden Generator (2), der eine zweite Ressource, die von der ersten Ressource verschieden ist, nutzt, umfassen, wobei das Verfahren folgende Schritte umfasst:

- Erhalten eines voraussichtlichen Bedarfs an thermischer Energie, der durch das hybride thermische System (10) über einen zukünftigen Zeitraum gedeckt werden soll;
- Bestimmen einer Aufteilung des voraussichtlichen Bedarfs an thermischer Energie zwischen den mehreren thermische Energie erzeugenden Generatoren des thermischen Energiesystems (10) über den zukünftigen Zeitraum, um einen Parameter (FP), der dem Betrieb des hybriden thermischen Systems (10) zugeordnet ist, zu optimieren;
- Betreiben des hybriden thermischen Systems (10) während des Zeitraums durch:

1) individuelles Steuern jedes thermische Energie erzeugenden Generators der mehreren thermische Energie erzeugenden Generatoren gemäß der bestimmten Aufteilung, um einen momentanen Bedarf an thermischer Energie zu decken;

**dadurch gekennzeichnet, dass** das Betreiben des hybriden thermischen Systems (10) während des Zeitraums ferner Folgendes umfasst:

2) Schätzen eines restlichen Bedarfs an thermischer Energie des voraussichtlichen Bedarfs an thermischer Energie, der durch das hybride thermische System (10) über den Rest des Zeitraums gedeckt werden soll, und Überprüfen der Machbarkeit der zuvor bestimmten Aufteilung zum Decken des restlichen Bedarfs an thermischer Energie;

3) wenn das Überprüfen negativ ausfällt, Korrigieren der zuvor bestimmten Aufteilung für den Rest des Zeitraums, um über den Rest des Zeitraums den restlichen Bedarf an thermischer Energie zu decken und gleichzeitig den Parameter (FP), der dem Betrieb des hybriden thermischen Systems (10) zugeordnet ist, zu optimieren;

4) periodisches Wiederholen der vorstehenden Schritte 1) bis 3) bis zum Ende des Zeitraums.

2. Verfahren nach den vorhergehenden Ansprüchen, wobei der Zeitraum ein Kalenderjahr ist.

3. Verfahren nach einem der vorhergehenden Ansprüche, wobei der Schritt des Schätzens und Überprüfens alle fünfzehn Minuten wiederholt wird.

4. Verfahren nach einem der vorhergehenden Ansprüche, wobei die Schritte des Bestimmens und des Korrigierens der Aufteilung des Bedarfs an thermischer Energie zwischen den mehreren thermische Energie erzeugenden Generatoren des thermischen Energiesystems (10) das Berücksichtigen eines oder mehrerer Parameter umfasst, die aus Parametern, die mit der Produktion und/oder dem Verbrauch der verschiedenen Ressourcen zusammenhängen, Parametern, die mit technischen Eigenschaften der thermische Energie erzeugenden Generatoren der mehreren thermische Energie erzeugenden Generatoren zusammenhängen, und/oder Parametern, die mit meteorologischen Vorhersagen zusammenhängen, ausgewählt sind.

5. Verfahren nach dem vorhergehenden Anspruch, wobei die Parameter, die mit der Produktion und/oder dem Verbrauch der verschiedenen Ressourcen zusammenhängen, einen Emissionsfaktor (EF) für jede Ressource der verschiedenen Ressourcen umfassen und die Parameter, die mit technischen Eigenschaften der thermische Energie erzeugenden Generatoren der mehreren thermische Energie erzeugenden Generatoren zusammenhängen, einen Wirkungsgrad für jeden thermische Energie erzeugenden Generator umfassen.

6. Verfahren nach einem der vorhergehenden Ansprüche, wobei die Schritte des Bestimmens und des Korrigierens der Aufteilung des Bedarfs an thermischer Energie zwischen den mehreren thermische Energie erzeugenden Generatoren des thermischen Energiesystems (10) das Berücksichtigen einer oder mehrerer Einschränkungen umfasst, die aus Einschränkungen, die mit der Bereitstellung der verschiedenen Ressourcen zusammenhängen, und/oder Einschränkungen, die mit technischen Eigenschaften der thermische Energie erzeugenden Generatoren der mehreren thermische Energie erzeugenden Generatoren zusammenhängen, ausgewählt sind.

7. Verfahren nach dem vorhergehenden Anspruch, wobei die erste Ressource durch das hybride thermische System (10) aus einem Netz (21) bezogen wird und die Einschränkungen, die mit der Bereitstellung der verschiedenen Ressourcen zusammenhängen, einen Netzanschlussgrenzwert umfassen.

8. Verfahren nach einem der Ansprüche 6 und 7, wobei die zweite Ressource durch das hybride thermische System (10) aus einem lokalen Speicher (22) bezogen wird und die Einschränkungen, die mit der Bereitstellung der verschiedenen Ressourcen zusammenhängen, eine Speicherkapazität und/oder ein Nachfüllintervall (D) des lokalen Speichers (22) umfassen.

9. Verfahren nach einem der vorhergehenden Ansprüche, wobei der Schritt des Korrigierens der zuvor bestimmten Aufteilung für den Rest des Zeitraums Folgendes umfasst:

- Bestimmen von Zeitpunkten, zu denen der zuvor bestimmte Anteil des restlichen Bedarfs an thermischer Energie, der durch einen oder mehrere thermische Energie erzeugende Generatoren (1) der mehreren thermische Energie erzeugenden Generatoren (1, 2) gedeckt werden soll, um einen vorgegebenen Korrekturfaktor erhöht werden kann, um den restlichen Bedarf an thermischer Energie zu decken;

- Auswählen eines Zeitpunkts aus den zuvor bestimmten Zeitpunkten, zu denen die Erhöhung um den Korrekturfaktor sich auf den zu optimierenden Parameter (FP), der dem Betrieb des hybriden thermischen Systems (10) zugeordnet ist, am wenigsten auswirkt;
- Korrigieren - um den Korrekturfaktor - der zuvor bestimmten Aufteilung zu dem ausgewählten Zeitpunkt für den einen oder die mehreren thermische Energie erzeugenden Generatoren (1) der mehreren thermische Energie erzeugenden Generatoren (1, 2).

10. Steuerung (3) für ein hybrides thermisches System (10), das mehrere thermische Energie erzeugende Generatoren aufweist und verschiedene Ressourcen zum Erzeugen thermischer Energie nutzt, wobei die mehreren thermische Energie erzeugenden Generatoren einen ersten thermische Energie erzeugenden Generator (1), der eine erste Ressource nutzt, und einen zweiten thermische Energie erzeugenden Generator (2), der eine zweite Ressource, die von der ersten Ressource verschieden ist, nutzt, umfassen, wobei die Steuerung (3) zum individuellen Steuern des Betriebs jedes thermische Energie erzeugenden Generators der mehreren thermische Energie erzeugenden Generatoren gemäß dem Verfahren nach einem der vorhergehenden Ansprüche ausgestaltet ist.

11. Hybrides thermisches Systems (10), das mehrere thermische Energie erzeugende Generatoren aufweist und verschiedene Ressourcen zum Erzeugen thermischer Energie nutzt und eine Steuerung (3) nach dem vorhergehenden Anspruch zum individuellen Steuern des Betriebs jedes thermische Energie erzeugenden Generators der mehreren thermische Energie erzeugenden Generatoren aufweist, wobei die mehreren thermische Energie erzeugenden Generatoren einen ersten thermische Energie erzeugenden Generator (1), der eine erste Ressource nutzt, und einen zweiten thermische Energie erzeugenden Generator (2), der eine zweite Ressource, die von der ersten Ressource verschieden ist, nutzt, umfassen.


**Revendications**

1. Procédé de commande d'un système thermique hybride (10), ledit système thermique hybride (10) présentant une pluralité de générateurs d'énergie thermique et utilisant diverses ressources pour produire de l'énergie thermique et présentant un dispositif de commande (3) pour commander individuellement le fonctionnement de chaque générateur d'énergie thermique de ladite pluralité de générateurs d'énergie thermique, la pluralité de générateurs d'énergie thermique comprenant un premier générateur d'énergie thermique (1) utilisant une première ressource et un second générateur d'énergie thermique (2) utilisant une seconde ressource différente de la première ressource, le procédé comprenant les étapes consistant à :

   - obtenir une demande d'énergie thermique prévue à satisfaire par l'intermédiaire du système thermique hybride (10) sur une période future ;
   - déterminer une allocation de ladite demande d'énergie thermique prédite entre la pluralité de générateurs d'énergie thermique dudit système d'énergie thermique (10) sur ladite période de temps future afin d'optimiser un paramètre (FP) associé au fonctionnement du système thermique hybride (10) ;
   - faire fonctionner ledit système thermique hybride (10) pendant ladite période de temps, par l'intermédiaire de l'étape consistant à :

      1) commander individuellement chaque générateur d'énergie thermique de ladite pluralité de générateurs d'énergie thermique en fonction de l'allocation déterminée afin de satisfaire une demande d'énergie thermique instantanée ;

      **caractérisé en ce que** ledit fonctionnement dudit système thermique hybride (10) pendant ladite période de temps, comprend en outre les étapes :

      2) estimer une demande d'énergie thermique restante de ladite demande d'énergie thermique prédite à satisfaire par le système thermique hybride (10) sur le reste de ladite période de temps et vérifier la faisabilité de l'allocation précédemment déterminée pour satisfaire ladite demande d'énergie thermique restante ;
      3) si ladite vérification est négative, corriger l'allocation précédemment déterminée pour ledit reste de ladite période de temps afin de satisfaire ladite demande d'énergie thermique restante tout en optimisant ledit paramètre (FP) associé au fonctionnement du système thermique hybride (10) sur ledit reste de ladite période de temps ;
      4) répéter périodiquement les étapes 1) à 3) cidessus jusqu'à la fin de ladite période de temps.

**2.** Procédé selon la revendication précédente, dans lequel ladite période de temps est d'une année civile.

**3.** Procédé selon l'une quelconque des revendications précédentes, dans lequel ladite étape d'estimation et de vérification est répétée toutes les quinze minutes.

**4.** Procédé selon l'une quelconque des revendications précédentes, dans lequel lesdites étapes de détermination et de correction de l'attribution de la demande d'énergie thermique entre la pluralité de générateurs d'énergie thermique dudit système d'énergie thermique (10) comprennent la prise en compte d'un ou de plusieurs paramètres sélectionnés parmi des paramètres liés à la production et/ou à la consommation des diverses ressources, des paramètres liés aux caractéristiques techniques des générateurs d'énergie thermique de ladite pluralité de générateurs d'énergie thermique et/ou des paramètres liés aux prévisions météorologiques.

**5.** Procédé selon la revendication précédente, dans lequel les paramètres liés à la production et/ou à la consommation des diverses ressources comprennent un facteur d'émission (EF) pour chaque ressource desdites diverses ressources, et les paramètres liés aux caractéristiques techniques des générateurs d'énergie thermique de ladite pluralité de générateurs d'énergie thermique comprennent un taux d'efficacité pour chaque générateur d'énergie thermique.

**6.** Procédé selon l'une quelconque des revendications précédentes, dans lequel lesdites étapes de détermination et de correction de l'allocation de la demande d'énergie thermique entre la pluralité de générateurs d'énergie thermique dudit système d'énergie thermique (10) comprennent la prise en compte d'une ou plusieurs contraintes sélectionnées parmi des contraintes liées à l'approvisionnement des diverses ressources et/ou des contraintes liées aux caractéristiques techniques des générateurs d'énergie thermique de ladite pluralité de générateurs d'énergie thermique.

**7.** Procédé selon la revendication précédente, dans lequel ladite première ressource est obtenue par ledit système thermique hybride (10) à partir d'un réseau (21), et lesdites contraintes liées à l'approvisionnement des diverses ressources comprennent une limite de connexion au réseau.

**8.** Procédé selon l'une quelconque des revendications 6 et 7, dans lequel ladite seconde ressource est obtenue par ledit système thermique hybride (10) à partir d'un stockage local (22) et lesdites contraintes liées à l'approvisionnement des diverses ressources comprennent une capacité de stockage et/ou un intervalle de remplissage (D) dudit stockage local (22).

**9.** Procédé selon l'une quelconque des revendications précédentes, dans lequel l'étape de correction de l'allocation précédemment déterminée pour ledit reste de ladite période de temps comprend les étapes consistant à :

- déterminer des moments auxquels la part précédemment déterminée de la demande d'énergie thermique restante à satisfaire par un ou plusieurs générateurs d'énergie thermique (1) de ladite pluralité de générateurs d'énergie thermique (1, 2) peut être augmentée d'un facteur de correction prédéterminé afin de satisfaire la demande d'énergie thermique restante ;
- sélectionner un moment parmi les moments précédemment déterminés auquel ladite augmentation dudit facteur de correction impacte le moins ledit paramètre (FP) à optimiser associé au fonctionnement du système thermique hybride (10) ;
- corriger, par ledit facteur de correction, l'attribution précédemment déterminée audit moment sélectionné pour lesdits un ou plusieurs générateurs d'énergie thermique (1) de ladite pluralité de générateurs d'énergie thermique (1, 2).

**10.** Dispositif de commande (3) pour un système thermique hybride (10) présentant une pluralité de générateurs d'énergie thermique et utilisant diverses ressources pour produire de l'énergie thermique, la pluralité de générateurs d'énergie thermique comprenant un premier générateur d'énergie thermique (1) utilisant une première ressource et un second générateur d'énergie thermique (2) utilisant une seconde ressource différente de la première ressource, le dispositif de commande (3) étant configuré pour commander individuellement le fonctionnement de chaque générateur d'énergie thermique de ladite pluralité de générateurs d'énergie thermique selon le procédé de l'une quelconque des revendications précédentes.

**11.** Système thermique hybride (10) présentant une pluralité de générateurs d'énergie thermique et utilisant diverses ressources pour produire de l'énergie thermique et un dispositif de commande (3) selon la revendication précédente pour commander individuellement le fonctionnement de chaque générateur d'énergie thermique de ladite pluralité de générateurs d'énergie thermique, la pluralité de générateurs d'énergie thermique comprenant un premier générateur d'énergie thermique (1) utilisant une première ressource et un second générateur d'énergie thermique (2) utilisant une seconde ressource différente de la première ressource.

Figure 1

$$\frac{EF_1(t)}{\eta_1(t)} \leq \frac{EF_2(t)}{\eta_2(t)}$$

*the emissions using source and device 1 are lower than the emissions with source and device 2*

$$W_{1,max} \geq W(t)$$

*device 1 has enough power to deliver the total demand*

$$\alpha(t) = \frac{W_{1,max}}{W(t)}$$

*use device 1 to its maximum power*

$$(1 - \alpha(t))W(t) < stock_2(t - dt)$$

*storage not empty to run device 2*

$$t - r > D$$

*last refill is older than the minimum refill interval*

Error change previous alpha to ensure enough storage, find the timestep where device 2 is most beneficial over device 1

$$\alpha(t) = 1$$

*use only device 1*

$$t = t + dt \text{ and loop}$$

$$stock_2(t) = stock_2(t - dt) - (1 - \alpha(t))W(t)$$

*empty storage to provide the remaining power*

$$t = t + dt \text{ and loop}$$

$$stock_2(t) = stock_{2,max} - (1 - \alpha(t))W(t)$$

*refill storage and empty it to provide the remaining power*

$$r = t$$
$$t = t + dt \text{ and loop}$$

$$\frac{EF_1(t)}{\eta_1(t)} \leq \frac{EF_2(t)}{\eta_2(t)}$$

$$W_{2,max} \geq W(t)$$

$$\alpha(t) = 1 - \frac{W_{2,max}}{W(t)}$$

$$(1 - \alpha(t))W(t) < stock_2(t - dt)$$

*storage not empty to run device 2*

$$t - r > D$$

*last refill is older than the minimum refill interval*

Error change previous alpha to ensure enough storage, find the timestep where device 2 is most beneficial over device 1

$$\alpha(t) = 0$$

$$stock_2(t) = stock_2(t - dt) - (1 - \alpha(t))W(t)$$

*empty storage to provide the remaining power*

$$t = t + dt \text{ and loop}$$

$$stock_2(t) = stock_{2,max} - (1 - \alpha(t))W(t)$$

*refill storage and empty it to provide the remaining power*

$$r = t$$
$$t = t + dt \text{ and loop}$$

# Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023154408 A1